# EUROPEAN PATENT APPLICATION

(11) **EP 4 432 648 A1**
(43) Date of publication of application: **18.09.2024**
(21) Application number: 23161623.6
(22) Date of filing: 13.03.2023
(51) Int. Cl.: H04N 7/14

(54) **MEETING TABLE STRUCTURE**

(71) Applicant: Vinton, Roger Alan, Dartford, Kent DA2 6NW (GB); McArdell, Roger Nicholas, Dartford, Kent DA2 6NW (GB)
(72) Inventor: Vinton, Roger Alan, DA2 6NW Dartford (GB); McArdell, Roger Nicholas, DA2 6NW Dartford (GB); Packer, Noel Liam, DA2 6NW Dartford (GB)
(74) Representative: Bryers Intellectual Property Ltd

(57) **Abstract**

In some examples, a meeting table structure comprises a first portion comprising a horizontal top comprising an upper surface forming a working area, a second portion, removably attachable to or provided as in integral part of the first portion, the second portion comprising a cavity defining a housing, the cavity being acoustically and/or thermally insulated from the first portion and acoustically and/or thermally insulated from the surrounding environment, and a chassis structure provided in the housing, the chassis structure configured to support a short-throw optical projection system, the chassis structure further comprising an arm configured to extend above the upper surface of the horizontal top of the first portion and configured to receive a camera apparatus and/or a speaker apparatus.

## Description

### Technical Field

The present disclosure relates, in general, to equipment for videoconferencing.

### Background

Videoconferencing is an established method of collaboration between remotely located participants. Often, a meeting held by videoconference can comprise a set of local participants, who may be located together in a conference or meeting room that includes a videoconference system to enable one or more remotely located participants to join in the meeting with the local attendees.

Whilst, in general, this can be convenient, there are drawbacks due to the limitations associated with videoconference systems. For example, for remote participants, a limited perspective video camera present in the meeting room can restrict the view of all of the participants in the meeting room. For the local participants, limitations with displays in the meeting room may provide an experience that is generally inferior to a face-to-face meeting since, for example, remote participants are displayed in a position within the meeting room that is unnatural. For example, remote participants may be displayed above the natural viewing level (e.g., eye level) of the local participants.

It is desirable, therefore, to have a videoconferencing system which enables a more natural experience for all participants such that, for example, natural eye contact may be maintained between participants as well as with persons appearing from remote locations.

### Summary

An objective of the present disclosure is to provide a system for videoconferencing that comprises a meeting table structure that lends itself to natural and efficient meetings between local and remote meeting participants.

The foregoing and other objectives are achieved by the features of the independent claims.

Further implementation forms are apparent from the dependent claims, the description and the Figures.

A first aspect of the present disclosure provides a meeting table structure, comprising a first portion comprising a horizontal top comprising an upper surface forming a working area, a second portion, removably attachable to or provided as in integral part of the first portion, the second portion comprising a cavity defining a housing, the cavity being acoustically and/or thermally insulated from the first portion and acoustically and/or thermally insulated from the surrounding environment, and a chassis structure provided in the housing, the chassis structure configured to support a short-throw optical projection system, the chassis structure further comprising an arm configured to extend above the upper surface of the horizontal top of the first portion and configured to receive a camera apparatus and/or a speaker apparatus.

The chassis structure can be moved relative to the first and/or second portions to enable a projected image to meet desired characteristics (such as size and position for example). The chassis structure can be physically separate or isolated from the second portion within which it is housed in order to prevent any, e.g., vibrations from being passed to the second portion and hence to the first portion and thus any local meeting participants sitting at the first portion. Suitable thermal and/or acoustic insulation can be provided in order to minimise the impact of any heat and/or noise from a projection system that may emanate from the projection system into the surrounding environment and/or towards the first portion where local participants may be seated. As such, no discomfort (thermal and/or acoustic) will be felt by such local participants, and any remote participants will not be subjected to any unwanted noise or vibrations.

In an implementation of the first aspect, the chassis structure can be removably provided within the housing of the second portion, or wherein the chassis structure is removably attachable to or provided as in integral part of the second portion. The upper surface of the horizontal top of the first portion can comprise a first aperture or opening through which the arm can extend, or via which the arm can pass.

In an example, the arm can be deployed between a first, stowed or retracted position in which it is provided within the housing and a second, extended position in which it extends above the upper surface of the horizontal top of the first portion. In the second, extended position, the arm can extend or pass through the first aperture or opening. The arm can comprise a telescopic portion.

Accordingly, the arm can be extended as desired or hidden away when not in use. The height of the distal end of the arm can be adjusted in order to enable any apparatus mounted thereon to be adjusted in height relative to a working surface of the meeting table structure. As such, for example, a camera apparatus can be adjusted in height in order to enable it to be at eye level for one or more of the local meeting participants. A telescopic portion of the arm can be used for height adjustment.

The second portion can comprise two side walls each configured to abut the first portion such that each side wall extends substantially perpendicularly from the first portion, with at least one of the sidewalls comprising an acoustic barrier portion or acoustic insulation configured to reduce sound emanating from the within housing to the surrounding environment and/or towards the first portion. At least one of the two side walls can further comprise a thermal barrier portion or thermal insulation configured to reduce heat emanating from the within housing to the surrounding environment and/or towards the first portion.

The second portion can comprise a front wall configured to extend substantially parallel and adjacent to the first portion and between the two side walls, the front wall comprising a thermal barrier portion or thermal insulation configured to reduce heat emanating from the within housing to the surrounding environment and/or towards the first portion. The front wall can further comprise an acoustic barrier portion or acoustic insulation configured to reduce sound emanating from the within housing to the surrounding environment and/or towards the first portion.

The second portion can comprise a rear wall configured to extend substantially parallel to the front wall and between the two side walls, wherein the rear wall comprises a second aperture or opening for the passage of light from the short-throw optical projection system from the housing to the surrounding environment.

In an example, the first portion can be curved. This can enable, for example, all local participants sitting at the first portion to be provided at the same distance from an image displayed on a projection screen and/or from a camera apparatus mounted to the arm, thereby obviating any issues with focus and depth of field and so on.

In an implementation, the chassis structure can be physically isolated from the first portion and the second portion, whereby to minimise vibrations passing to and/or from the chassis portion to the first portion and/or the second portion.

The second portion can comprise a cable management system. For example, cabling from a projection system can be routed through such a system to a control apparatus (e.g., a computer or laptop etc.) and/or power outlets.

The second portion can be configured to isolate a short-throw optical projection system supported on the chassis structure from the surrounding environment, whereby to prevent damage to the short-throw optical projection system and to prevent it from presenting a hazard, such as a trip hazard.

A second aspect of the present disclosure provides a chassis structure for supporting a short-throw optical projection system, the chassis structure comprising an arm configured to extend above an upper surface of a horizontal top of a first portion of a meeting table structure as provided in according to the first aspect, wherein the arm of the chassis portion is configured to receive a camera apparatus and/or a speaker apparatus. In an example, the chassis structure can comprise secure mountings to allow the projector to be positioned and/or locked in the correct position and can provide ancillary mountings for associated video conferencing and presentation connectivity equipment complete with cable containment and fixings.

A third aspect of the present disclosure provides a second portion of a meeting table structure as provided according to the first aspect.

In an implementation of the third aspect, the second portion can further comprise multiple tool less connector portions configured to attach to corresponding tool less connector portions of the first portion of the meeting table structure, whereby to removably attach the second portion to the first portion.

The second portion can further comprise multiple tool less connector portions configured to attach to corresponding tool less connector portions of the chassis structure, whereby to removably attach the chassis structure to the second portion. As such, one or both of the first portion and the chassis structure can comprise multiple tool less connector portions to enable them to be removably attached to other parts of the structure as desired.

These and other aspects of the invention will be apparent from the embodiment(s) described below.

### Brief Description of the Drawings

In order that the present disclosure may be more readily understood, embodiments will now be described, by way of example, with reference to the accompanying drawings, in which:
Figure 1 is a schematic representation of a meeting table structure according to an example;
Figure 2 is a schematic representation of a meeting table structure, shown in plan view (i.e. from above), according to an example;
Figure 3 is a schematic representation of a meeting table structure, shown in perspective view according to an example;
Figure 4 is a schematic representation of a chassis structure according to an example; and
Figure 5 is a schematic representation of a second portion, shown in plan view, according to an example.

### Detailed Description

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

The phrases "in one implementation," or "in some implementations," may each refer to one or more of the same or different implementations. The term "coupled" is defined as connected whether directly or indirectly through intervening components and is not necessarily limited to physical connections. The expression "at least one of A, B and C" or "at least one of the following: A, B and C" means "only A, or only B, or only C, or any combination of A, B and C."

The terms "system" and "network" may be used interchangeably.

For the purposes of explanation and non-limitation, specific details such as functional entities, techniques, protocols, and standards are set forth for providing an understanding of the present disclosure. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software or a combination of software and hardware. Disclosed functions may correspond to modules which may be software, hardware, firmware, or any combination thereof

Analyses of how to give people in meeting rooms who are meeting with remote participants virtually using videoconference systems the same experience as those using, e.g., individual laptops have been undertaken by various stakeholders. A conclusion reached was that a 21:9 aspect ratio could be used to advantageously display remote participants as well as any material relevant to a meeting (e.g., chat windows, presentations etc.). A large image with this aspect ratio can be used to implement a videoconference layout that puts the faces of the incoming (remote) participants on a strip along the bottom of the image with other shared content above. An example of such a layout is 'Front Row', provided by Microsoft as part of their Teams videoconference system.

Presenting a suitably sized image with a 21:9 aspect ratio is, in general, not possible with standard LCD displays. Furthermore, LED small pitch video walls are typically too expensive and impractical. A solution for a large image with a 21:9 aspect ratio is to display it by way of projection. For example, short-throw optical projection systems can be used to project an image of a videoconference layout as described above onto a suitable surface, such as a projection screen, in a meeting room. Typically, short-throw optical projection systems are provided on stands designed to stand on the floor between a meeting table for local participants and the screen used to display the projected image. However, such implementation typically do not comply with, e.g., the US Americans with Disability Act (ADA) rules because the stand (either in isolation or when supporting a projection system) presents a hazard. In general, a stand such as that described above presents a health and safety issue.

According to an example, a meeting table structure is provided to overcome the with projection described above. In an implementation, the meeting table structure can incorporate an optical projection system, such as a short-throw optical projection system, as well as a camera mount. As such, an optical projection system does not present a hazard and is not provided in an exposed position in a meeting room, such as on the floor for example.

According to an example, a meeting table structure is provided, which can be used as part of a videoconferencing system. In an implementation, the meeting table structure can comprise a portion that is configured to isolate a short-throw optical projection system, whereby to prevent damage to the short-throw optical projection system and to prevent it from presenting a hazard, such as a trip hazard.

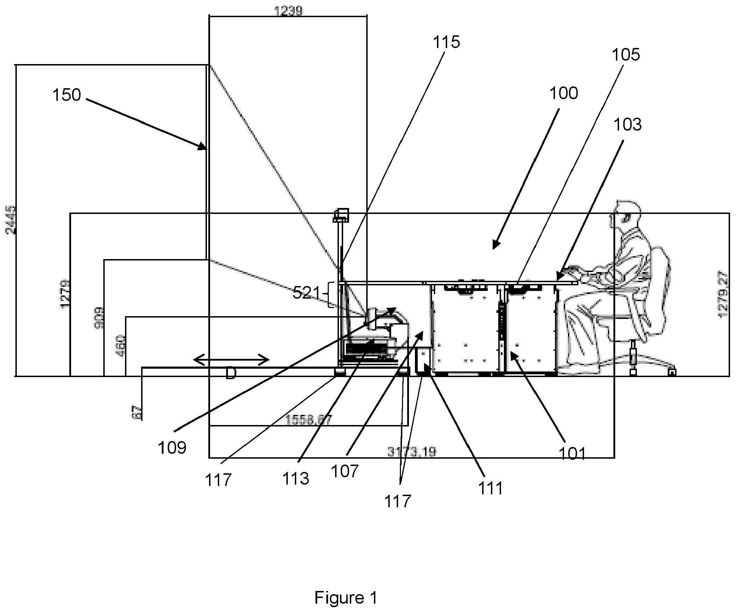

Figure 1 is a schematic representation of a meeting table structure according to an example. The meeting table structure 100 comprises a first portion 101 comprising a horizontal top 103 comprising an upper surface 105 forming a working area. A second portion 107, which can be removably attachable to or provided as in integral part of the first portion 101, comprises a cavity 109 defining a housing. In an implementation the cavity 109 is acoustically and/or thermally insulated from the first portion 101 and acoustically and/or thermally insulated from the surrounding environment (e.g., a meeting room within which the meeting table structure 100 is provided).

In an example, a chassis structure 111 is provided within the housing. The chassis structure 111 can support a short-throw optical projection system 113. The chassis structure 111 can further comprise an arm 115 configured to extend above the upper surface 105 of the horizontal top 103 of the first portion 101. The arm 115 can receive a camera apparatus and/or a speaker apparatus. Such a camera apparatus and/or a speaker apparatus can be used to generate an image of the meeting room and/or the participants in the meeting room. The camera can comprise a microphone used to generate audio data from, e.g., conversations with the meeting room within which the meeting table structure 100 is provided. The speaker can be used to output audio from one or more remote participants.

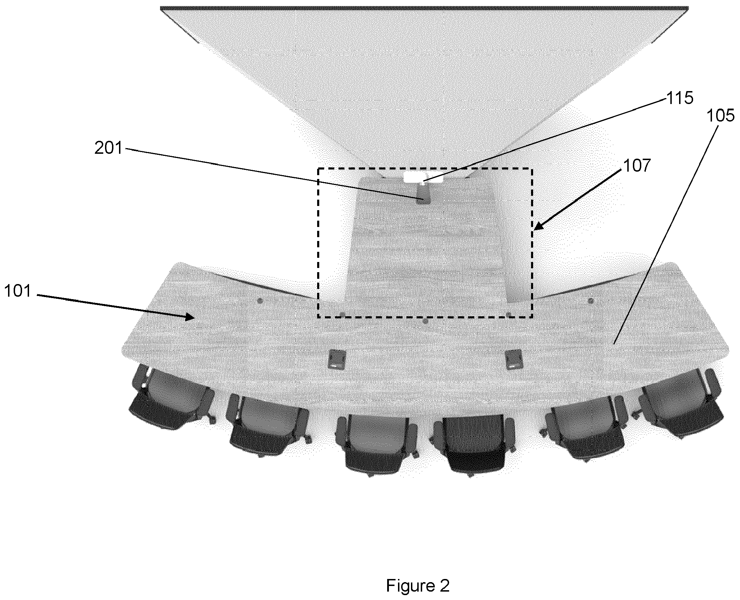

Figure 2 is a schematic representation of a meeting table structure, shown in plan view (i.e. from above), according to an example. In the example of figure 2, the first portion 105 is curved. The second portion 107 is depicted generally within the dashed box, and comprises the portion that extends out from the first portion 101. The arm 115 can be seen, and the upper surface 105 is visible. The upper surface 105 is, in an example, a working area that extends over the first portion 101. The upper surface may extend over the second portion. That is, in an example, the upper surface may extend over the first portion and the second portion and be provided at the same level across both portions such that there is no discontinuity in the height of the working area over the first and second portions. In other examples, the upper surface of the second portion may be provided at a different height to that of the first portion (e.g., it may be lower or higher).

In the example of figure 2 a meeting table structure to accommodate six local participants is depicted. A meeting table structure to accommodate more than or fewer than six local participants can be provided. For example, the first portion 101 can be larger to accommodate more chairs, and so on. In an example, a second raised row of seating can be added behind the first to increase numbers of seats if required.

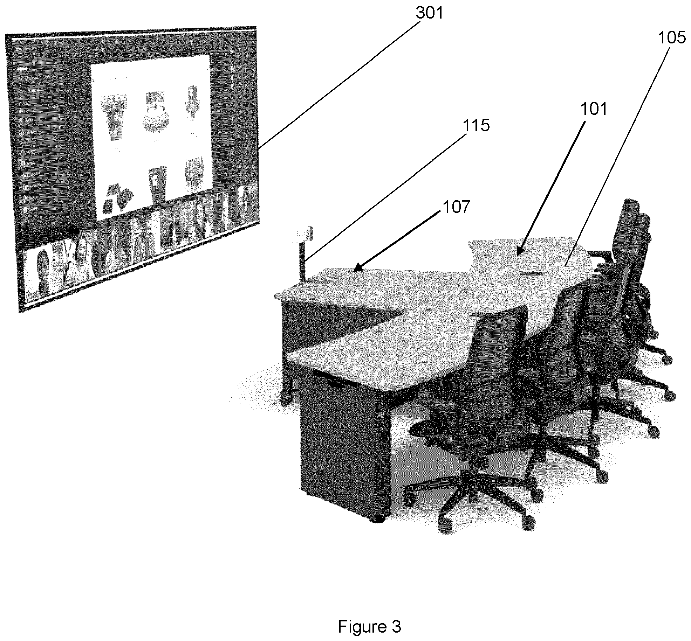

Figure 3 is a schematic representation of a meeting table structure, shown in perspective view according to an example. A projection screen 301 is depicted in figure 3, that can be used to display an image projected from a short-throw optical projection system.

Referring to figure 1, the chassis structure 111 may be provided on castors 117, several of which are visible in the example of figure 1, in order to enable the chassis structure to be positioned as desired within the housing and/or removed therefrom as desired (e.g., to enable a projection system to be fitted thereto or serviced etc.).

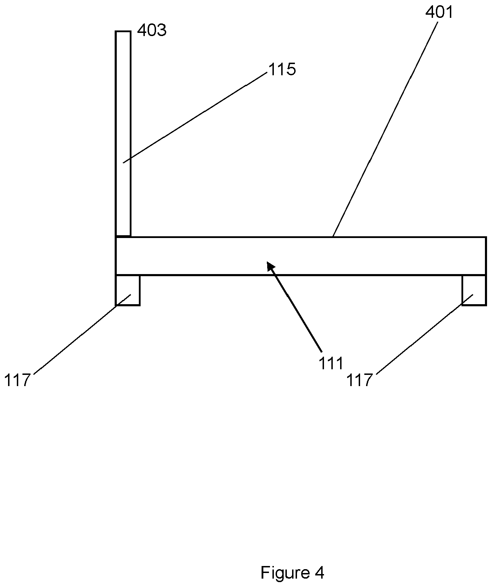

Figure 4 is a schematic representation of a chassis structure according to an example. The chassis structure is arranged to support a projection system, such as a short-throw optical projection system. The chassis structure comprises multiple castors 117, whereby to enable the chassis structure to be moved around as desired. One or more castors may include a locking mechanism or braking mechanism to prevent movement, such as when the chassis structure is located as desired.

The chassis structure comprises an arm 115 configured to extend above an upper surface of a horizontal top of a first portion of a meeting table structure as described above. The arm 115 of the chassis portion can receive a camera apparatus and/or a speaker apparatus, which can be mounted or attached at a distal end 403 of arm 115. The chassis structure comprises a surface 401 upon which a projection system can be mounted. The surface 401 can comprise one or more fixing points, vias (channels etc.) or other fixing means that can be used to removably fix or attach a projection system to the chassis structure. A projection system may be strapped, screwed or bolted onto the chassis structure. In an example, surface 401 can comprises one or more protrusions and/or indentations that are positioned and profiled to correspond to portions of a projection system, whereby to enable the projection system to be located on the surface 401 and to provide a mechanism to prevent movement (e.g. lateral movement) of the projection system.

In an implementation, the chassis structure can be removably provided within the housing of the second portion. That is, the chassis portion is provided as a standalone structure that can be independently moved. In an example, the chassis structure can be removably attachable to or provided as in integral part of the second portion.

In an example, and referring to figure 2, the upper surface 105 of the horizontal top of the first portion 101 comprises a first aperture 201 through which the arm 115 can extend. The chassis structure and therefore a projection system can be provided within the housing without any part thereof, save for the arm, which extends out through the first aperture 201, lying or being provided outside of the meeting table structure.

The arm 115 can be deployed between a first, stowed or retracted position in which it is provided within the housing and a second, extended position in which it extends above the upper surface of the horizontal top of the first portion. In the second, extended position, such as can be seen in figure 3 for example, the arm 115 extends through the first aperture 201. In an example, the arm 115 can comprise a telescopic (or foldable) portion. Accordingly, the arm 115 can be easily deployed between the first and second positions. Furthermore, the height that the arm extends above the upper surface of the horizontal top of the first portion can be varies, enabling a desired height for an imaging apparatus to be obtained, whereby to enable local participants to be easily images and thus viewable by any remote participants.

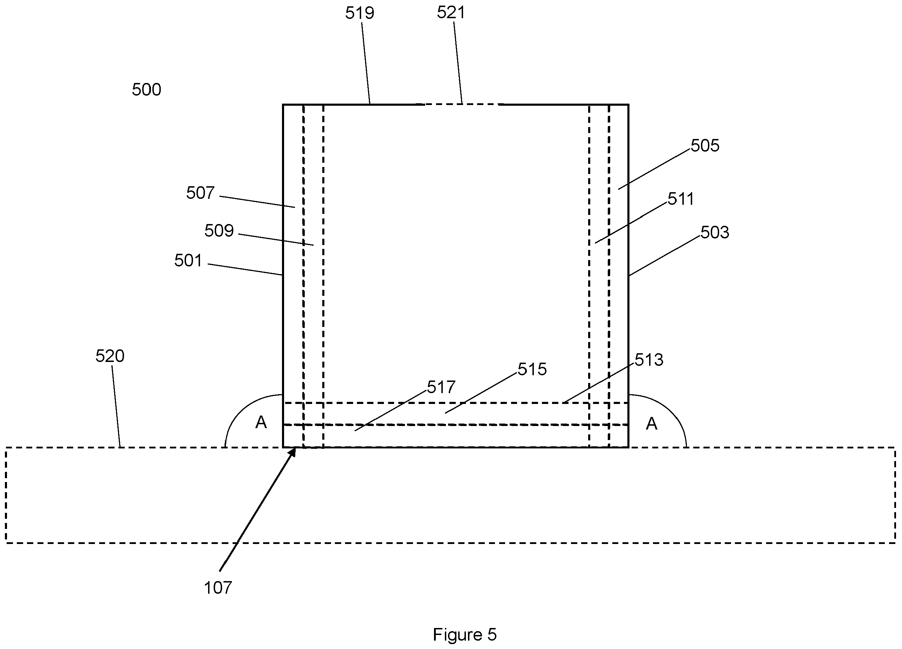

Figure 5 is a schematic representation of a second portion, shown in plan view, according to an example. The second portion 107 comprises two side walls 510; 503 each configured to abut the first portion such that each side wall extends substantially perpendicularly from the first portion. In the example of figure 5, an exemplary position of the first portion is depicted by the dotted region 520. In some example, the second portion may be trapezoidal in shape, in which case the side walls 501; 503 may abut the first portion such that each side wall extends at an angle from the first portion (i.e. A may be more or less than 90 degrees).

In an implementation, at least one of the sidewalls 501; 503 comprises an acoustic barrier portion or acoustic insulation 505; 507 configured to reduce sound emanating from the within housing to the surrounding environment 500 and/or towards the first portion 520. At least one of the two side walls 503, 507 can further comprise a thermal barrier portion or thermal insulation 511; 509 configured to reduce heat emanating from the within housing to the surrounding environment 500 and/or towards the first portion 520. An acoustic barrier portion or acoustic insulation and a thermal barrier portion or thermal insulation may be provided by a single element that acts to provide both thermal and acoustic insulation, instead of separate elements as depicted in figure 5.

In an example, the second portion comprises a front wall 513 configured to extend substantially parallel and adjacent to the first portion 520 and between the two side walls 501; 503. The front wall can comprise a thermal barrier portion or thermal insulation 515 configured to reduce heat emanating from the within housing to the surrounding environment and/or towards the first portion. The front wall can further comprise an acoustic barrier portion or acoustic insulation 517 configured to reduce sound emanating from the within housing to the surrounding environment and/or towards the first portion. An acoustic barrier portion or acoustic insulation and a thermal barrier portion or thermal insulation may be provided by a single element that acts to provide both thermal and acoustic insulation, instead of separate elements.

The second portion can comprise a rear wall 519 configured to extend substantially parallel to the front wall 513 and between the two side walls 501; 503. The rear wall comprises a second aperture or opening 521 for the passage of light from the short-throw optical projection system from the housing to the surrounding environment. Second aperture 521 may be circular, or any other suitable shape. Referring to figure 1, second aperture 521 may extend over a portion of the rear wall that is sufficient to enable a projection system to project an image 150 onto a suitable display such as a projection screen for example. Second aperture 521 may be oversized to enable the chassis structure to be moved back and forth (e.g., in direction D) to enable an image 150 from a projection system to be suitable positioned. In an example, the image 150 is a 21:9 aspect ratio image. The image 150 may be, e.g., a 4K or 5K image with a longest dimension of around 267cm (around 105 inches). As noted above, such an aspect ratio and image size is particularly suitable for a videoconference that is implemented using a Microsoft Teams Front Row layout for example. The rear wall 519 can comprise acoustic and/or thermal insulation or barriers (not shown) similarly to the other walls of the chassis structure if desired.

In an example, the chassis structure is physically isolated from the first portion and the second portion, whereby to minimise vibrations passing to and/or from the chassis portion to the first portion and/or the second portion.

The second portion can comprise a cable management system. For example, one or more of the side walls 501; 503 and/or the front and rear walls 513; 519 can define a cavity and/or opening to receive and/or house cabling (such as from the projection system for example) and/or control equipment (such as power units, codecs and so on). Accordingly, and because the chassis structure can be physically separate from the meeting table structure, a projection distance can be varied to allow the use of different projector systems.

The meeting table structure provides a solution to the problem of mounting both projector and camera in appropriate positions without the camera position compromising a projection beam from the projection system. A projection system and a mount provided on the arm of the chassis structure, as well as portions of the table and screen mount system can use a tool less connection system for easy assembly, however, e.g., nuts and bolts can be used instead. In an example, a meeting table structure as described herein can comprise a complete housing system. However it can be used in parts. For example, a chassis structure and/or a first and/or second portion can be provided separately from one another. For example, a projection screen can be mounted on a wall and a chassis structure can be used without the first and second portions. An optical projection system can be any one of a variety of 3rd party systems.

The present disclosure is described with reference to flow charts and/or block diagrams of the method, devices, structures and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. A meeting table structure, comprising:
a first portion comprising a horizontal top comprising an upper surface forming a working area;
a second portion, removably attachable to or provided as in integral part of the first portion, the second portion comprising a cavity defining a housing, the cavity being acoustically and/or thermally insulated from the first portion and acoustically and/or thermally insulated from the surrounding environment; and
a chassis structure provided in the housing, the chassis structure configured to support a short-throw optical projection system, the chassis structure further comprising an arm configured to extend above the upper surface of the horizontal top of the first portion and configured to receive a camera apparatus and/or a speaker apparatus.

2. The meeting table structure as claimed in claim 1, wherein the chassis structure is removably provided within the housing of the second portion, or wherein the chassis structure is removably attachable to or provided as in integral part of the second portion.

3. The meeting table structure as claimed in claim 1 or 2, wherein the upper surface of the horizontal top of the first portion comprises a first aperture through which the arm can extend.

4. The meeting table structure as claimed in any preceding claim, wherein the arm can be deployed between a first, stowed or retracted position in which it is provided within the housing and a second, extended position in which it extends above the upper surface of the horizontal top of the first portion.

5. The meeting table structure as claimed in claim 4, wherein, in the second, extended position, the arm extends through the first aperture.

6. The meeting table structure as claimed in any preceding claim, wherein the arm comprises a telescopic portion.

7. The meeting table structure as claimed in any preceding claim, wherein the second portion comprises two side walls each configured to abut the first portion such that each side wall extends substantially perpendicularly from the first portion, at least one of the sidewalls comprising an acoustic barrier portion or acoustic insulation configured to reduce sound emanating from the within housing to the surrounding environment and/or towards the first portion.

8. The meeting table structure as claimed in claim 7, wherein at least one of the two side walls further comprises a thermal barrier portion or thermal insulation configured to reduce heat emanating from the within housing to the surrounding environment and/or towards the first portion.

9. The meeting table structure as claimed in any preceding claim, wherein the second portion comprises a front wall configured to extend substantially parallel and adjacent to the first portion and between the two side walls, the front wall comprising a thermal barrier portion or thermal insulation configured to reduce heat emanating from the within housing to the surrounding environment and/or towards the first portion.

10. The meeting table structure as claimed in claim 9, wherein the front wall further comprises an acoustic barrier portion or acoustic insulation configured to reduce sound emanating from the within housing to the surrounding environment and/or towards the first portion.

11. The meeting table structure as claimed in claim 9 or 10, wherein the second portion comprises a rear wall configured to extend substantially parallel to the front wall and between the two side walls, wherein the rear wall comprises a second aperture or opening for the passage of light from the short-throw optical projection system from the housing to the surrounding environment.

12. The meeting table structure as claimed in any preceding claim, wherein the first portion is curved.

13. The meeting table structure as claimed in any preceding claim, wherein the chassis structure is physically isolated from the first portion and the second portion, whereby to minimise vibrations passing to and/or from the chassis portion to the first portion and/or the second portion.

14. The meeting table structure as claimed in any preceding claim, wherein the second portion comprises a cable management system.

15. The meeting table structure as claimed in any preceding claim, wherein the second portion is configured to isolate a short-throw optical projection system supported on the chassis structure from the surrounding environment, whereby to prevent damage to the short-throw optical projection system and to prevent it from presenting a hazard, such as a trip hazard.

16. A chassis structure for supporting a short-throw optical projection system, the chassis structure comprising an arm configured to extend above an upper surface of a horizontal top of a first portion of a meeting table structure as claimed in any preceding claim, wherein the arm of the chassis portion is configured to receive a camera apparatus and/or a speaker apparatus.

17. A second portion of a meeting table structure as claimed in any of claims 1 to 15.

18. The second portion as claimed in claim 17, further comprising multiple tool less connector portions configured to attach to corresponding tool less connector portions of the first portion of the meeting table structure, whereby to removably attach the second portion to the first portion.

19. The second portion as claimed in claim 17 or 18, further comprising multiple tool less connector portions configured to attach to corresponding tool less connector portions of the chassis structure, whereby to removably attach the chassis structure to the second portion.
